# EUROPEAN PATENT APPLICATION

(11) **EP 0 837 593 A2**
(43) Date of publication of application: **22.04.1998**
(21) Application number: 97308369.4
(22) Date of filing: 21.10.1997
(51) Int. Cl.: H04N 1/00, H04N 1/04

(54) **A printing and scanning machine**

(30) Priority: 21.10.1996 KR 9647263
(71) Applicant: Samsung Electronics Co., Ltd., Suwon City, Kyungki-do (KR)
(72) Inventor: Kang, Sung-wook, Kiheung-eup, Yongin, Kyonggi-do (KR); Mizuta, Sadao, Suwon, Kyonggi-do (KR)
(74) Representative: Tunstall, Christopher Stephen

(57) **Abstract**

A printing and scanning machine is described which includes a printer head module for printing data onto a medium and a scanner module, including a scanning glass, for scanning data from the medium. A worm gear arrangement is provided to separate the scanning means from the medium by a distance greater than the distance between the printing means and the medium, during execution of a printing operation using the printing means. In addition, a pollution preventing cover is rotatably attached to the underside of the scanning means and includes a drive gear. A guide gear is mounted on the printing means and engages the drive gear so as to rotate the pollution preventing cover into a position at which it covers the scanning glass as the scanning means is separated from the medium. Thus contamination of the scanning glass by ink particles can be prevented.

## Description

### BACKGROUND OF THE INVENTION

The present invention relates to a multifunctional machine having a ink-jet printing head module and a scanner module.

Nowadays, office automation facilities such as printers and scanners are widely used. Such facilities of high efficiency are constantly being developed to improve and extend their functions and the price of such products is high. On the other hand, one product which has been produced to lessen the economic burden to users is a combined machine for printing and scanning.

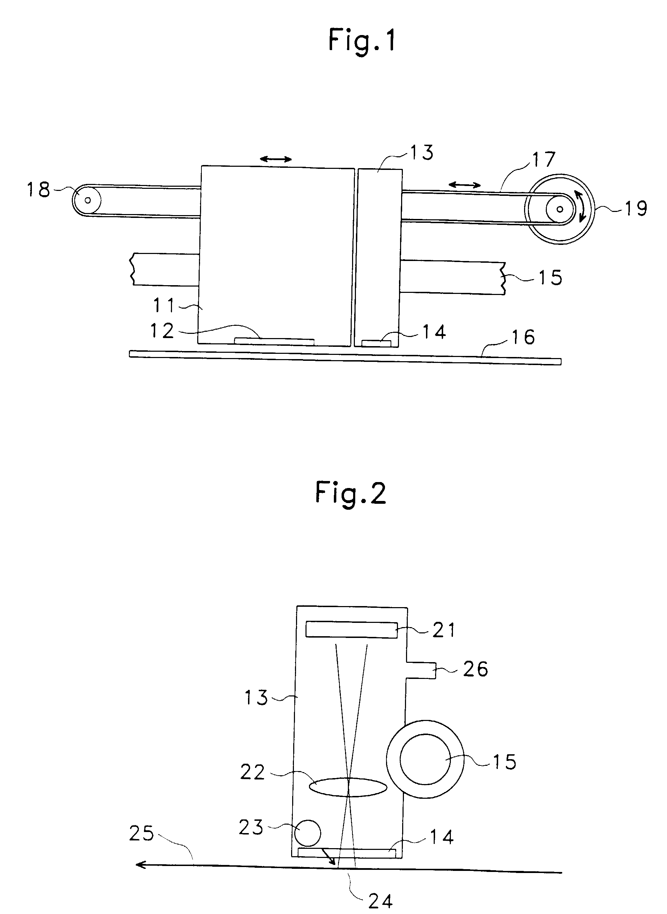

Fig. 1 is a front view of a multifunctional machine having a conventional ink-jet printer head module and a scanning module, and Fig. 2 is a side view of Fig. 1. As shown in these drawings, a head module 11 of the ink-jet printer which performs a printing operation by spraying ink onto paper and a scanner module 13 for reading data from the paper perform the printing and scanning operations by moving to the right and the left along a guide shaft 15 according to the rotation of a driving motor 19. During the reciprocation of the ink-jet printer head module 11 and the scanner module 13, the printing operation is performed by spraying ink from inside the ink-jet printer head module 11 onto paper 16 through a head part 12 of the ink-jet printer.

During the reciprocation of the ink-jet printer head module 11 and the scanner module 13, a lamp 23 inside the scanner module 13 shown in Fig. 2 radiates light onto the paper 16. Here, the reflected light arrives at an optical sensor 21 through a scanning glass 14 and a lens 22, and thus the paper is scanned.

As shown above, in a multifunctional machine having an ink-jet printer head module and a scanner module, the ink-jet printer head module 11 and the scanner module 13 are constituted together. Thus, printing and scanning suffer from problems in that the ink ejected through the head part 12 of the ink-jet printer marks the paper 16 and the remaining ink may contaminate the neighbouring apparatus. Moreover, as the scanning glass 14 of the scanning module 13 may be contaminated, scanning cannot be performed.

### SUMMARY OF THE INVENTION

Therefore, it is an objective of the present invention to provide a multifunctional machine, which is capable of preventing the scanning module from being contaminated.

To achieve the above-mentioned objectives, the present invention provides a printing and scanning machine comprising:
a printer head module for printing data onto a medium;
a scanner module for scanning data from the medium; and
means for separating the scanning means from the medium by a distance greater than the distance between the printing means and the medium, during execution of a printing operation using the printing means.

The printer head module may be an ink-jet printer head module.

Preferably, the separating means comprises:
a transfer motor;
a worm which is driven by the transfer motor; and
an inner worm gear on the scanning means which cooperates with the worm to move the scanning means towards and away from the medium as the worm rotates.

The transfer motor may be mounted on the printing means.

Preferably, the scanning means includes a scanning glass and the machine further comprises pollution preventing means adapted to cover the scanning glass when it is separated from the medium to prevent the glass from being contaminated.

The pollution preventing means may comprise:
a pollution preventing cover which is rotatably attached to the underside of the scanning means and includes a drive gear;
a guide gear mounted on the printing means and adapted to engage the drive gear so as to rotate the pollution preventing cover into a position at which it covers the scanning glass as the scanning means is separated from the medium; and
a cover stopping projection which engages the pollution preventing cover and causes it to become parallel to the medium as the scanning means approaches the medium.

Preferably, the cover stopping projection engages the pollution preventing cover when the latter is at an angle to the medium of 45°. Preferably, a torsion spring is provided between the pollution preventing cover and the scanning means, for biasing the pollution preventing cover to the said 45° angle.

### BRIEF DESCRIPTION OF THE DRAWINGS

The present invention will now be described by way of example with reference to the accompanying drawings in which:
Fig. 1 is a front view of a multifunctional machine having a conventional ink-jet printer head module and a scanner module;
Fig. 2 is a side view of the scanning module of Fig. 1;
Fig. 3A is a front view of a multifunctional machine having an ink-jet printing head module and a scanner module, when scanning, according to the present invention;
Fig. 3B is a front view of a multifunctional machine having an ink-jet printing head module and a scanner module, when printing, according to the present invention;
Fig. 4A is a front view of a multifunctional machine having an ink-jet printing head module and a scanner module, when scanning, according to another embodiment of the present invention;
Fig. 4B is a front view of a multifunctional machine having an ink-jet printing head module and a scanner module, when printing, according to the other embodiment of the present invention; and
Figs. 5A and 5B show the conditions of the cover of Figs. 4A and 4B.

### DETAILED DESCRIPTION OF THE PREFERRED EMBODIMENTS

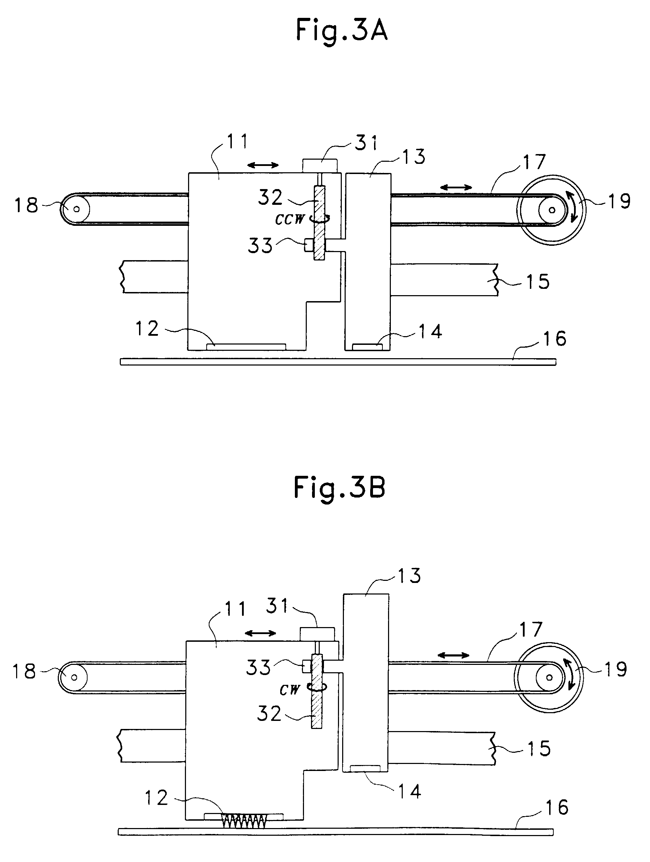

As shown in FIG. 3A, the machine includes a transfer motor 31 attached on a ink-jet printer head module 11, a worm 32 which is connected to the transfer motor 31 and an inner worm gear 33 which receives power from the worm and moves the scanner module up and down.

Referring to Fig. 3A, the scanning operation according to the present invention will be explained. First, the scanner module 13 is lowered as the transfer motor 31 is rotated counterclockwise (CCW), and a scanning glass 14 is located near the paper 16. After placing the scanning glass 14 near the paper 16, a lamp 23 inside of the scanner module 13 illuminates the paper 16 during movement of the ink-jet printer head module 11 and the scanner module 13 to right and left. The reflected light arrives at an optical sensor 21 through the scanning glass 14 and a lens 22, and thus the paper is scanned.

Referring to Fig. 3B, the printing operation according to the present invention will be explained. After separating the scanning glass from the paper 16, during the ink-jet printer head module 11 and the scanner module 13 is moved to right and left, and the printing operation is performed by spraying ink from inside of the ink-jet printer head module 11 onto the paper 16 through a head part 12 of the ink-jet printer.

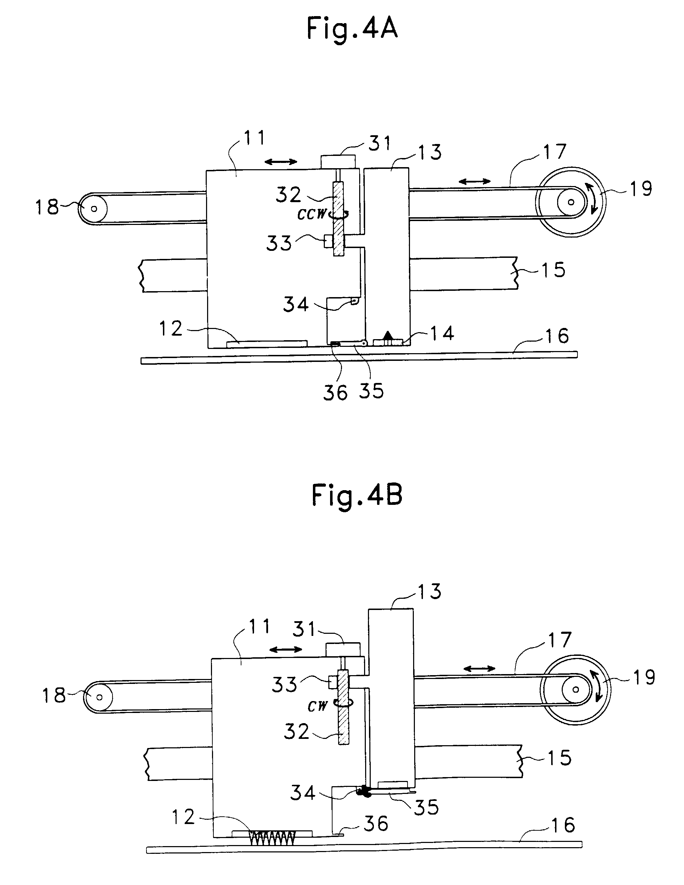

Fig. 4A is a front view showing a multifunctional machine having an ink-jet printer head module and a scanner module according to another embodiment of the present invention. As shown in the drawing, it includes a transfer motor 31 which is attached to an ink-jet printer head module 11, a worm 32 which is connected to the transfer motor 31 and an inner worm gear 33 which receives power from the worm 32 and moves a scanner module 13 up and down. A pollution preventing cover 35 is attached to the bottom of the scanner module 13 and a guiding gear 34 engages in the gear of the pollution preventing cover 35 and enables the pollution preventing cover 35 to cover the scanning glass 14, when the scanner module 13 arrives at its upper point. A cover stopping projection 36 makes the pollution preventing cover 35 parallel to the paper by engaging the end of the pollution preventing cover 35 when the pollution preventing cover 35 is slanted at a predetermined angle and the scanning module 13 is lowered to the paper and arrives at its lower point.

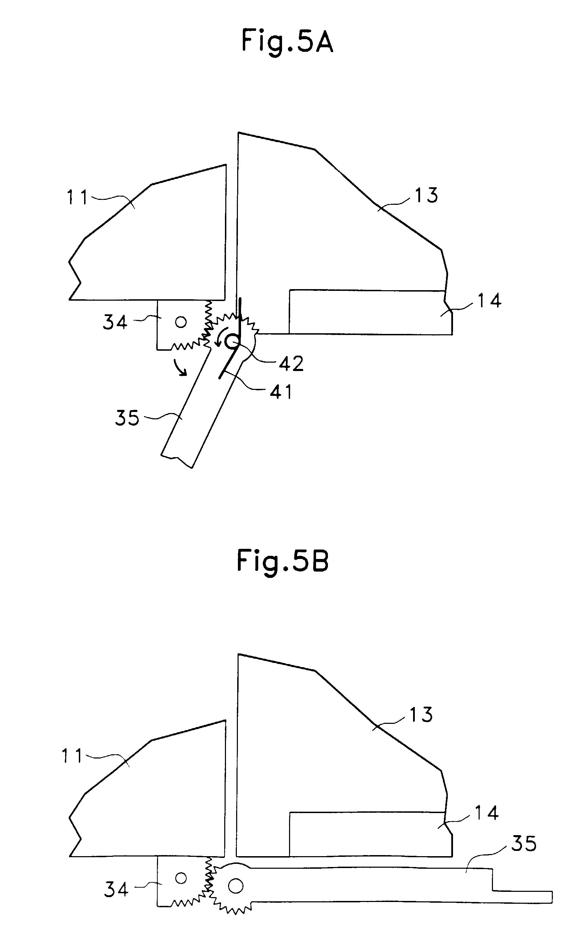

Referring to Fig. 4A, the scanning operation according to the present invention will be explained as follows. First, the scanner module 13 is lowered as the transfer motor 31 is rotated counterclockwise (CCW), and the scanning glass 14 is located near the paper 16. As shown in Fig. 5A, the pollution preventing cover 35 is lifted up about 45° by a torsion spring 41 which is supported elastically by the scanner module 13 and the pollution preventing cover 35. As the scanner module 13 is lowered, the end of the pollution preventing cover 35 is engaged by the cover stopping projection 36 and becomes parallel to the scanning glass 14, and thus does not contact on the paper 16, as shown in Fig. 4A.

After placing the scanning glass 14 near the paper 16, during the movement of the ink-jet printer head module 11 and the scanner module 13 to right and left, the lamp 23 within the scanner module 13 illuminates the paper 16. The reflected light arrives at the optical sensor 21 through the scanning glass 14 and a lens 22, and thus the paper 16 is scanned.

Referring to the Fig. 4B, the printing operation according to the present invention having the above-described construction will be explained. First, the scanner module 13 is elevated as the transfer motor 31 is rotated clockwise (CW). As shown in Fig. 5A, the pollution preventing cover 35 is lifted up to about 45° by a torsion spring which is supported elastically by the scanner module 13 and the pollution preventing cover 35. As the scanner module 13 is elevated, the gear at the end of the pollution preventing cover 35 is engaged in the guiding gear 34 and it is rotated counterclockwise. Accordingly, as shown in Fig. 5B, the pollution preventing cover 35 covers the scanning glass 14 and prevents the scanning glass 14 from being contaminated by ink.

After separating the scanning glass 14 from the paper and covering the scanning glass with the pollution preventing cover 35, during the movement of the ink-jet printer head module 11 and the scanner module 13 to right and left, the printing operation is performed by spraying ink from inside of the ink-jet printer head module 11 onto the paper 16 through the ink-jet printer head part 12.

As described above, using the ink-jet printer head module and the scanner module according to the present invention, has the effect of preventing contamination caused by the scattering of ink.

## Claims

1. A printing and scanning machine comprising:
a printer head module for printing data onto a medium;
a scanner module for scanning data from the medium; and
means for separating the scanning means from the medium by a distance greater than the distance between the printing means and the medium, during execution of a printing operation using the printing means.

2. A printing and scanning machine according to claim 1 in which the printer head module is an ink-jet printer head module.

3. A printing and scanning machine according to claim 1 or claim 2 in which the separating means comprises:
a transfer motor;
a worm which is driven by the transfer motor; and
an inner worm gear on the scanning means which cooperates with the worm to move the scanning means towards and away from the medium as the worm rotates.

4. A printing and scanning machine according to claim 3 in which the transfer motor is mounted on the printing means.

5. A printing and scanning machine according to any preceding claim in which the scanning means includes a scanning glass and further comprising pollution preventing means adapted to cover the scanning glass when it is separated from the medium to prevent the glass from being contaminated.

6. A printing and scanning machine according to claim 5 in which the pollution preventing means comprises:
a pollution preventing cover which is rotatably attached to the underside of the scanning means and includes a drive gear;
a guide gear mounted on the printing means and adapted to engage the drive gear so as to rotate the pollution preventing cover into a position at which it covers the scanning glass as the scanning means is separated from the medium; and
a cover stopping projection which engages the pollution preventing cover and causes it to become parallel to the medium as the scanning means approaches the medium.

7. A printing and scanning machine according to claim 6 in which the cover stopping projection engages the pollution preventing cover when the latter is at an angle to the medium of 45°.

8. A printing and scanning machine according to claim 7 further comprising a torsion spring between the pollution preventing cover and the scanning means, for biasing the pollution preventing cover to the said 45° angle.

9. A printing and scanning machine as described with reference to and as illustrated in FIGs. 3A-5B of the accompanying drawings.
